# EUROPEAN PATENT APPLICATION

(11) **EP 0 968 868 A1**
(43) Date of publication of application: **05.01.2000**
(21) Application number: 99305251.3
(22) Date of filing: 02.07.1999
(51) Int. Cl.: B60K 17/22, F16D 3/38

(54) **Improved drive shaft component**

(30) Priority: 04.07.1998 GB 9814460
(71) Applicant: Bramcote Limited, Halford, Tamworth B79 7RB (GB)
(72) Inventor: Pickering, Stephen Mark, Barlestone, Nuneaton CV13 0HW (GB)
(74) Representative: Gee, Steven William

(57) **Abstract**

This invention relates to an improved drive shaft component, and in particular to an improved slip assembly member for the drive shaft of a motor vehicle such as a truck. According to the invention, at least part of the slip assembly member for a vehicle drive shaft is manufactured from austempered ductile iron. Preferably, the yoke (12) and the splined part (14) of the slip assembly member are manufactured as a single cast piece.

## Description

### FIELD OF THE INVENTION

This invention relates to an improved drive shaft component, and in particular to an improved slip assembly member for the drive shaft of a motor vehicle such as a truck.

### BACKGROUND TO THE INVENTION

A drive shaft communicates the rotary output of the engine and gearbox of a vehicle to its driving wheels. The drive shaft will often communicate the rotary output to a differential assembly which is part of the vehicle's drive axle.

Such a drive shaft will typically comprise {i} a universal joint at each end for respective connection to the output of the engine or gearbox and to the differential assembly, {ii} a tubular section permanently secured to one of the universal joints, and {iii} a slip assembly comprising a sleeve and a slip assembly member, the slip assembly member being permanently secured to the other universal joint and including a splined part, the splined part and sleeve being separable so as to permit the separation of the two ends of the drive shaft for subsequent maintenance or other requirement.

Since the drive shaft (and its components) transmit the torque of the engine to the driving wheels, this is necessarily a high strength component. In some large trucks the drive shaft must be able to transmit torque in excess of 22 kNm for example.

When producing metallic components to a size and shape required, it is known to use forging or casting techniques. Briefly, forging is the pressing of a mass of hot metal into a finished shape, whilst casting is the pouring of molten metal into a mould having the finished shape. Both forgings and castings can be machined to remove unwanted material from the finished shape and to provide more accurately defined surfaces; however, machining to remove unwanted material is often an unnecessary expense and the designer of the forging tool or the casting mould will seek to design the tool or mould so that there is a minimum amount of unwanted material in the finished shape.

The yokes which make up parts of the universal joints of a drive shaft, as well as the splined part of a drive shaft, can in principle be made by either a forging or casting process. However, since forgings are generally accepted as having greater shear strength than castings of similar cross section, it has been customary to manufacture such components as forgings.

It has however long been recognised that the forging process requires more material than an equivalent part made as a casting, i.e. because of the pressing process and the draft angles which are required therein there must be material in positions as a requirement of the process rather than as a requirement of the component; such material adds unnecessary cost, and more importantly unnecessary weight, to the component. When casting a component it is often possible to produce a mould which more closely matches the actual material requirements of the component, i.e. the amount of unwanted material is generally less with a casting than with a similar forging. Clearly, manufacturers wish to reduce the amount of material used, both to save cost and also to save weight of the finished component, so that castings generally predominate for components which do not require the shear strength of a forging.

The materials which are used in manufacturing castings are numerous, but a commonly used material is "spheroidal graphite iron", or "SG iron". As its name suggests, the graphite in the cast material is in the form of spheres dispersed throughout the iron. There are many grades of SG iron, for example SG 600 and SG 700, the higher the number the greater the shear strength which the material will withstand, but typically also the greater the casting cost.

It is known to manufacture the slip assembly member of smaller trucks from SG 700, which slip assembly members can transmit up to approximately 11 or 12 kNm of torque. For larger trucks, however, and those for which the drive shaft and slip assemblies thereof are required to transmit higher torques, SG iron is not suitable.

In addition, it is not usually economic to manufacture the entire slip assembly member as a single forging, so that most manufacturers make the yoke as a forging and the splined part from hollow bar, the two parts being permanently secured together either by a friction weld or by a peripheral weld. The splines are machined into the hollow bar after the bar has been secured to the yoke.

The requirement to secure together the two parts of the slip assembly member represents a significant disadvantage. In particular the requirement to ensure the accuracy and completeness of the weld requires considerable investment in quality control. In addition, the machinery necessary to create a friction weld in such a component is considerable. In the alternative embodiments in which a peripheral weld is used, this is a time-consuming process which can add greatly to the cost of the slip assembly member.

Austempered ductile iron has been available for many years. Such a material includes a matrix of acircular ferrite and carbon enriched austenite, often referred to as ausferrite. Austempering involves a heat treatment process for the cast material, comprising three general stages. Firstly, the cast material is austenised in the temperature range 840 - 950 °C for a time sufficient to produce a fully austenitic matrix that is saturated with carbon. Secondly, the casting is rapidly cooled to an austempering temperature in the range 230 - 400 °C (without forming pearlite or allowing the formation of ausferrite to begin). Thirdly, the casting is isothermically treated at the austemperting temperature to produce ausferrite with an austenite carbon content in the range 1.8% to 2.2%. Castings of this material are available for example from ADI Treatments of PO Box 38, Priest Street, Cradley Heath, West Midlands, B64 6JW, England.

### STATEMENT OF THE INVENTION

The inventor has realised that austempered ductile iron provides additional shear strength over a similar component manufactured from SG iron, and that components which it was previously thought possible only to manufacture as forgings could be susceptible to casting in austempered ductile iron.

According to the invention therefore, there is provided a slip assembly member for a vehicle drive shaft, the slip assembly member comprising a yoke and a splined part, characterised in that at least part of the slip assembly member is manufactured from austempered ductile iron.

Preferably, the yoke and the splined part are manufactured as a single cast piece.

It will be known to those skilled in this art that there are five grades of austempered ductile iron, the grades being differentiated by their tensile and yield strengths as well as other mechanical properties, which properties are determined by the heat treatment undertaken as part of the manufacturing process of the iron. Preferably, the slip assembly is manufactured from grade 1 or grade 2 austempered ductile iron. Whilst these grades have lower absolute tensile strengths and yield strengths than grades 3,4 and 5, they have greater fatigue strengths and so are better suited to repeated applications of load as will occur with a vehicle drive shaft component.

The reference to grades 1 and 2 is to the American ASTM 897M90 scale; the equivalent European scale is EN 1560, and the equivalent types of ADI are EN-GJS-800-8 (EN-JS1100) and EN-GJS-1000-5 (EN-JS1110) respectively.

Preferably, the yoke of the cast slip assembly member has a zero or near-zero peripheral draft angle (the peripheral angle of the largest part of the yoke); preferably also, all of the draft angles are zero or near-zero.

Desirably, the splined part is hollow; preferably also the bore of the splined part is tapered at one end, desirably at both ends.

The reduction of the draft angles, and the tapering of the bore, reduces the weight of the slip assembly member, without requiring additional machining.

Preferably, the splines extend to or close to the shoulder between the splined part and the yoke; preferably also there is no removal of material between the ends of the splines and the shoulder. Such a construction maximises the cross-section of the splined part adjacent the shoulder.

### DESCRIPTION OF THE DRAWINGS

The invention is further described, by way of example, with reference to the accompanying drawings, in which:-
- Fig.1: is a cross-sectional view, partly in cross-section, of a prior art slip assembly member; and
- Fig.2: is a similar view of a slip assembly member according to the invention.

The prior art slip assembly member 2 comprises a yoke 4 and a hollow bar 6. The slip assembly member 2 has not yet been machined, i.e. the splines which will be machined into part of the hollow bar 6 to create the splined part, and the apertures which will be drilled through the yoke 4 so that it can be connected to the remainder of the universal joint, have not yet been formed.

The structure of the slip assembly member 2, and the function of each of its various parts, will be known to those skilled in the art so that a detailed description is not required. Nevertheless, for the avoidance of doubt the yoke 4 is adapted to form part of a universal joint and the splines (when formed) of the hollow bar 6 are adapted for rotational drive communication with a sleeve (not shown) having corresponding splines by which the drive can be communicated throughout the remainder of the drive shaft (not shown).

As above described, for drive shafts required to transmit in excess of 11 to 12 kNm it is known to make the slip assembly member in two parts as shown, i.e. the yoke 4 is made as a forging. The hollow bar is produced from suitable stock having appropriate outer and inner diameters. The two parts secured together weld 8, in this embodiment a peripheral weld, but in other embodiments a friction weld or a butt weld. The splines are cut into the hollow bar after the two parts have been joined together.

The hollow bar 6 has a shoulder 10, which serves to locate the weld 8. In practice, when the splines are formed they do not extend to the shoulder, but rather stop some distance away from this, for example at or around the line A. Material is removed from between the end of the splines and the shoulder, to the depth of the splines, forming a neck in the splined part, the purpose of which neck is to permit the sleeve to slide freely on and off the splined part, i.e. the splines of the sleeve cannot become locked onto a tapering ends of the splines.

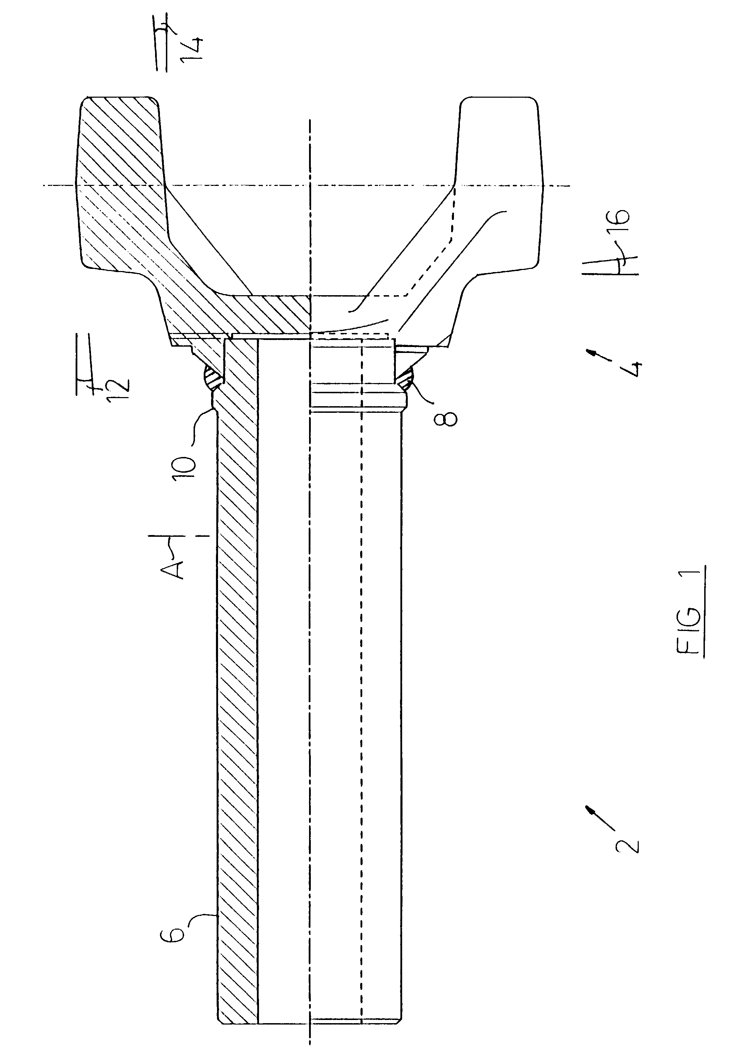

Fig.1 also shows the draft angles 12,14 and 16 which are included on the yoke 4 as a result of the forging process. The draft angles 12, 14 and 16 introduce additional material which is required by the forging process, but which is not required to be present for the yoke to function. Accordingly, the yoke 4, and thus the slip assembly member 2, are heavier than is necessary because of the forging process by which it is manufactured. The draft angles 12,14 and 16 are typically each around 5°.

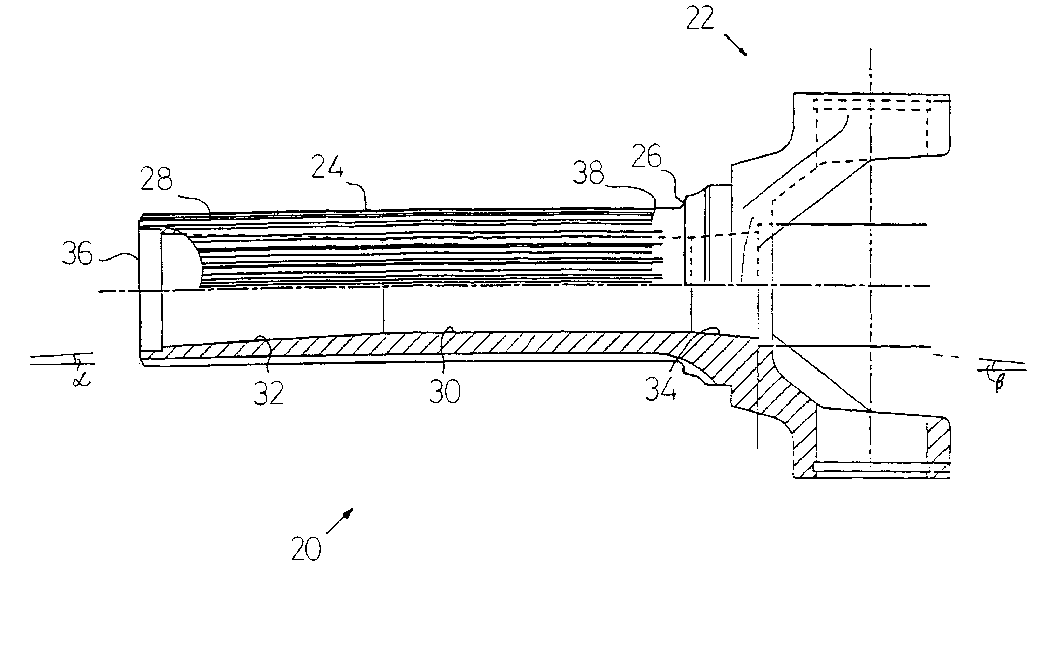

Fig.2 shows a slip assembly member according to the invention. The slip assembly member 20 is manufactured as a single part, so avoiding the requirement for strict quality control into the jointing process, and avoiding the high capital cost of friction welding equipment or the oncost incurred by the use of a peripheral weld.

In line with other casting techniques, the shaping of the mould can be chosen to create the optimum use of material, i.e. ideally to place the material only in those positions in which it is required by the component, and yet avoid the cost of machining to remove unwanted material. Thus, it will be seen from Fig.2 that the yoke 22 has no draft angles corresponding to the angles 12,14 and 16 on the yoke 4 of Fig.1.

In addition, since the splined part 24 is also cast, rather than being from hollow bar as in Fig.1, the bore 30 of the splined part can be optimised to save weight. Thus, as shown, the ends of the bore 30 of the splined part 24 are tapered at angles α and β respectively. In this embodiment, the taper angle α is shallower than the taper angle β, and the taper 32 adjacent the yoke 22 is shorter than the taper 34 adjacent the free end 36 of the splined part 24; in other embodiments the taper angles can be the same, or the taper adjacent the yoke can be longer than the taper adjacent the free end 36, if desired for the particular component.

In the embodiment shown, the taper 34 stops short of the shoulder 26 located at the junction between the yoke 22 and the splined part 24, and the taper 32 entends slightly less than half of the length of the splines 28. The inventor has realised that the extreme end 36 of the splined part 24 must accommodate less torque than the region adjacent the shoulder 26, and so can be of thinner section. Also, beyond the shoulder 26 the yoke 22 is of increasing thickness, so that the bore 30 can be tapered whilst still ensuring the larger cross-section which will be required for the greater torque to be accommodated by this region.

In addition, the casting process allows material to be "removed" (or rather not to be present) from the core of the stub yoke as compared with a prior art component (not seen in the drawings).

it will also be understood that the casting technique permits the designer greater freedom of choice in surface angles and contours with a view to reducing weight, stresses and machining time.

It is an additional advantage that the density of the austempered ductile iron used in less than that of a forging steel; carbon steels typically used in forgings have a density of approximately 7.8 g cm⁻³, whilst austempered ductile iron of the grades concerned has a density of approximately 7.1 g cm⁻³.

With all of the above advantages, the use of an austempered ductile iron casting for the manufacture of the slip assembly member shown has resulted in a 25% saving in weight compared to the previously-used forging. Nevertheless, it has been determined that such a slip assembly member can transmit in excess of 22 kNm of torque, which is sufficient for larger trucks including those with a gross vehicle weight exceeding 40 tonnes.

A further modification has been made to the splined part of the present slip assembly member, in that the splines 28 are extended almost to the shoulder 26. Also, there is no neck created by the removal of material from between the end of the splines 28 and the shoulder 26, so that the cross-section of the splined part is maximised in this region - a widely-recognised weak spot. However, to avoid the splines of the sleeve locking onto a tapering ends 38 of the splines, the sleeve (not shown) is modified slightly, having a recess adjacent its end which will accommodate but not foul the tapering ends 38.

## Claims

1. A slip assembly member (20) for a vehicle drive shaft, the slip assembly member comprising a yoke (22) and a splined part (24), characterised in that at least part of the slip assembly member is manufactured from austempered ductile iron.

2. A slip assembly member according to claim 1, characterised in that the yoke (22) and the splined part (24) are manufactured as a single cast piece.

3. A slip assembly member according to claim 2, characterised in that the slip assembly member is manufactured from grade 1 austempered ductile iron.

4. A slip assembly member according to claim 2, characterised in that the slip assembly member is manufactured from grade 2 austempered ductile iron.

5. A slip assembly member according to any of claims 1-4 characterised in that the yoke (24) of the slip assembly member has a zero or near-zero peripheral draft angle.

6. A slip assembly member according to any of claims 1-5 characterised in that the splined part (24) is hollow, and in that the bore (30) of the splined part has a taper (32,34) at one end.

7. A slip assembly member according to claim 6 characterised in that the bore (30) has a taper (32,34) at both ends.

8. A slip assembly member according to claim 7 in which the taper angles (α,β) at the two ends of the bore are different.

9. A slip assembly member according to any of claims 1-8 characterised in that the splines (28) extend to or close to the shoulder (26) between the splined part (24) and the yoke (22).

10. A slip assembly member according to any of claims 1-9 characterised in that there is no removal of material between the ends (34) of the splines and the shoulder (26).
